# EUROPÄISCHE PATENTSCHRIFT

(11) **EP 3 483 654 B1**
(45) Veröffentlichungstag und Bekanntmachung des Hinweises auf die Patenterteilung: **08.12.2021**
(21) Anmeldenummer: 18199714.9
(22) Anmeldetag: 10.10.2018
(51) Int. Cl.: G03B 21/10, B60K 35/00, B60W 50/14, G01C 21/36, G02B 27/01

(54) **ERKENNUNG UND VISUALISIERUNG VON SYSTEMUNSICHERHEIT BEI DER DARSTELLUNG AUGMENTIERTER BILDINHALTE IN HEAD-UP-DISPLAYS**
DETECTION AND VISUALIZATION OF LACK OF SYSTEM SECURITY IN RENDERING AUGMENTED IMAGE CONTENT IN HEAD-UP DISPLAYS
DÉTECTION ET VISUALISATION DE L'INSÉCURITÉ DU SYSTÈME LORS LA PRÉSENTATION DES CONTENUS D'IMAGE AUGMENTÉ DANS DES AFFICHAGES TÊTE HAUTE

(30) Priorität: 14.11.2017 DE 102017220268
(43) Veröffentlichungstag der Anmeldung: 15.05.2019
(73) Patentinhaber: VOLKSWAGEN AKTIENGESELLSCHAFT, 38440 Wolfsburg (DE)
(72) Erfinder: Sadovitch, Vitalij, 38102 Braunschweig (DE)

(56) Entgegenhaltungen:
- US-A1- 2005 065 721
- US-A1- 2009 005 961
- US-A1- 2014 379 260

## Beschreibung

Die Erfindung betrifft ein Verfahren zur Erkennung und Visualisierung von Systemunsicherheit bei der Darstellung augmentierter Bildinhalte in Head-Up-Displays, insbesondere in Kraftfahrzeugen, sowie eine Vorrichtung zur Ausführung des Verfahrens.

Head-Up-Displays (HUDs) erlangen gerade in Kraftfahrzeugen zunehmend an Bedeutung. Im Gegensatz zu anderen Anzeigevorrichtungen bieten sie die Möglichkeit, dem Fahrer Informationen direkt in sein Blickfeld einzublenden. Damit muss er seinen Blick nicht mehr von dem Verkehrsgeschehen abwenden, was trotz des im allgemeinen kurzen Moments des Wegsehens stets ein gewisses Sicherheitsrisiko mit sich bringt.

Head-Up-Displays werden heutzutage bereits von vielen Herstellern als Sonderausstattung angeboten. Als Informationen werden dabei insbesondere die Geschwindigkeit, Navigationshinweise und relevante Verkehrszeichen dargestellt.

Der Einsatz von Head-Up-Displays ist nicht auf Kraftfahrzeuge beschränkt, auch in anderen Verkehrsmitteln, insbesondere in Flugzeugen, stellen sie eine leistungsfähige technische Einrichtung zur Unterstützung des Fahrzeugführers (im Flugzeug: des Piloten) dar.

Vom Aufbau her lassen sich Head-Up-Displays in die bildgebende Einheit sowie die Projektionsfläche unterteilen. In der bildgebenden Einheit werden die auf dem Head-Up-Display anzuzeigenden Bildelemente generiert und von einer Projektionseinrichtung in Richtung der Projektionsfläche abgestrahlt. Die Lichtstrahlen durchlaufen dabei im allgemeinen einen abgewinkelten Strahlengang, der durch entsprechende Spiegel erzeugt wird. Dieses ist notwendig, um den erforderlichen Einbauraum für die bildgebende Einheit zu begrenzen. Das eigentliche Bild entsteht auf einer speziellen Projektionsfläche. Hierbei kann es sich insbesondere um eine sogenannte Combinerscheibe handeln, die sich im Blickfeld des Fahrers befindet. Alternativ wird das Bild direkt auf der Windschutzscheibe erzeugt, wodurch auf die Combinerscheibe verzichtet werden kann.

Der Begriff Head-Up-Display wird vielfach für die eigentliche Projektionsfläche verwendet. Streng genommen umfasst die Einrichtung jedoch zusätzlich die bildgebende Einheit, die Einrichtungen zur Herstellung des notwendigen Strahlengangs sowie die erforderlichen Steuervorrichtungen zur Erzeugung der Bildinhalte. Im Sinne der Erfindung wird der Begriff Head-Up-Display gesamtheitlich verwendet, und es wird von einer Darstellung auf dem Head-Up-Display gesprochen, obgleich die eigentliche Darstellung ausschließlich auf der Projektionsfläche erfolgt.

Um den Informationsgehalt zu erhöhen und einen direkten Bezug zur Umwelt herzustellen, finden zunehmend Augmented-Reality-Technologien (AR-Technologien) Einzug in die Darstellungen auf den Head-Up-Displays. Bei dieser Technologie werden virtuelle Bildelemente angezeigt, die das sichtbare reale Bild erweitern, d.h. augmentieren. Derartige augmentierte Bildinhalte können beispielsweise Navigationshinweise sein, die nicht nur die eigentliche Fahrtrichtung anzeigen, sondern auch auf die Straße verweisen, in die eingebogen werden soll, und die sich dynamisch mit der Fahrzeugbewegung verändern.

Um das Empfinden eines natürlichen Bildes zu erwecken, wird bei augmentierten Bildinhalten angestrebt, die Informationen entsprechend ihrer Position und Orientierung in der realen Welt darzustellen. Hierbei spricht man von einer kontaktanalogen Darstellung.

Neben den bekannten Fahrerinformationen lassen sich mit der AR-Technologie auch zusätzlich Bildelemente darstellen, die über die klassischen Anzeigeinhalte in einem Kraftfahrzeug hinausgehen. Ein Beispiel hierfür sind Hinweise auf besondere Fahr- oder Gefährdungssituationen. Dieses kann beispielsweise der Hinweis auf eine Person sein, die sich auf der Fahrbahn befindet oder kurz davor steht, die Fahrbahn zu betreten, oder ein Fahrzeug, das bei einem bevorstehenden Fahrmanöver zu beachten ist.

Grundsätzlich werden an die Darstellung von augmentierten Bildinhalten in einem realen Umgebungsbild sehr hohe Genauigkeitsanforderungen gestellt. Dieses betrifft sowohl die Positionierung der Bildinhalte als auch die perspektivische Ausrichtung. Schon geringste Abweichungen zwischen dem realen Bild und den augmentierten Bildinhalten werden als Fehler wahrgenommen. Bei sehr großen Abweichungen, z.B. eines Navigationshinweises, kann es auch zu fehlerhaften Fahrmanövern kommen.

Die Verringerung eines Abbildungsfehlers bei der Darstellung von AR-Bildinhalten sowie die Vermeidung oder Verringerung eines Fehlerempfindens des Bedieners stellen somit wichtige technische Aufgaben bei der Entwicklung von AR-Head-Up-Displays dar.

In der Schrift DE 10344120 A1 wird daher ein Verfahren beschrieben, das einen Zuverlässigkeitswert für die Genauigkeit von Navigationshinweisen ermittelt und die Darstellung des Hinweises entsprechend des ermittelten Wertes anpasst. Damit soll eine stets zuverlässig interpretierbare Darstellung von Navigationshinweisen in einem Bild der Fahrumgebung geschaffen werden.

In der Schrift DE 11 2006 002 459 B4 wird ein Verfahren beschrieben, mit dessen Hilfe in Abhängigkeit von der Zuverlässigkeit, mit der ein Umgebungsobjekt erkannt wird, eine optische Hervorhebung des Objektes erfolgt. Damit wird es möglich, den Fahrer auf sicher erkannte Objekte hinzuweisen. Andere Objekte werden ebenfalls dargestellt, jedoch optisch nicht hervorgehoben.

In der Schrift DE 10 2015 001 360 A1 wird demgegenüber ein Verfahren vorgestellt, mit dessen Hilfe die Genauigkeit bei der Ermittlung der Fahrzeugposition durch eine wiederholte Positionsermittlung gesteigert wird. Diese erhöhte Genauigkeit der Positionsbestimmung kann bei der Darstellung von AR-Informationen genutzt werden. Schrift US2009005961 beschreibt eine sehr detaillierte Lösung für die Einblendung einer Navigationsroute auf dem Head-up-Display eines Fahrzeuges. Eine Besonderheit besteht darin, dass die Navigationsroute in Form eines virtuellen Bandes oberhalb des Fahrzeuges angezeigt wird.

Die Schrift US2014379260 offenbart ein HUD System welches den Straßenzustand erfasst, bevor das Fahrzeug einen Punkt erreicht, an dem die unabhängige Bewegung des Fahrzeugs wahrscheinlich stattfindet. Dann kann mit der Änderung der Bildinformation und damit der Kompensation der Eigenbewegung rechtzeitig darauf reagiert werden.

Schrift US2005065721 zeigt eine Vorrichtung für die Anzeige von Navigationsinformationen in einem Fahrzeug. US2005065721 offenbart, dass bei Vorliegen von Unsicherheiten bei der Bestimmung der Position des Fahrzeuges die Bilderzeugungseinheit zu anderen Anzeigetypen wechselt, beispielsweise zu schematischen Pfeilen oder virtuellen Verkehrszeichen, wobei der Fahrer nicht erwartet, dass diese Symbole sich optisch an die sich ändernde Umgebung anpassen.

Trotz aller Lösungsansätze für die Erhöhung der Darstellungsgenauigkeit läßt sich der Darstellungsfehler nicht vollständig vermeiden. Es besteht daher weiterhin die Aufgabe, die Wahrnehmbarkeit einer Darstellungsungenauigkeit zu verringern.

Erfindungsgemäß wird diese Aufgabe durch ein Verfahren gemäß des Anspruches 1 sowie einer Vorrichtung gemäß des Anspruches 8 gelöst. Vorteilhafte Ausgestaltungen werden in den Unteransprüchen offenbart.

Der technische Effekt der vorliegenden Erfindung besteht darin, eine Anzeige von kontaktanalogen AR-Bildinhalten in einem Head-Up-Display dergestalt zu ermöglichen, dass der Nutzer die Darstellung nicht oder nicht so stark als fehlerhaft empfindet.

Das erfindungsgemäße Verfahren sieht vor, dass zunächst mit Hilfe einer Kamera ein Bild der realen Welt erfasst wird. Dieses Bild wird einer Steuervorrichtung zur Verfügung gestellt, in der es ausgewertet. Aufgabe der Steuervorrichtung ist es dabei, die AR-Bildinhalte sowohl hinsichtlich des Inhaltes als auch der Positionierung in dem realen Bild zu bestimmen.

Als AR-Bildinhalte kommen insbesondere kontaktanaloge Navigationshinweise oder sonstige Warn- oder Gefahrenhinweise in Betracht. So kann beispielsweise ein Fahrzeug, das sich im Blickfeld des Fahrers befindet und von dem möglicherweise eine Gefahr ausgeht, durch eine geeignete Einblendung hervorgehoben werden. Dem Bediener fällt es damit leichter, eine solche Gefährdungssituation zu erkennen.

Die AR-Bildinhalte sowie die allgemeinen Fahrerinformationen wie z.B. die Geschwindigkeit werden auf das Head-Up-Display projeziert. Abhängig von der Bauform des HUDs erfolgt die Darstellung dabei entweder direkt auf der Windschutzscheibe oder auf der Combinerscheibe. Der Fahrer nimmt damit sowohl das reale Bild der Umgebung als auch die auf das Head-Up-Display projezierten Bildinhalte wahr.

In einem weiteren Schritt des erfindungsgemäßen Verfahrens wird ein Kennwert ermittelt, der die Systemunsicherheit bei der Darstellung der augmentierter Bildinhalte beschreibt. Unter einem solchen Kennwert wird ein Zahlenwert verstanden, der die verschiedenen Sensorinformationen bzw. die Informationen verschiedener Computervorrichtungen auswertet und zu einem einzelnen, die Systemunsicherheit bei der Darstellung der AR-Inhalte beschreibenden Wert zusammengefasst.

Basierend auf dem ermittelten Kennwert werden die augmentierten Bildinhalte sowohl hinsichtlich der Darstellungsform als auch der Positionierung in dem Head-Up-Display angepasst. Unter der Darstellungsform werden grundsätzlich alle geometrischen Formen verstanden, mit denen in dem Head-Up-Display Zusatzinformationen in das reale Bild der Umgebung eingeblendet werden können. Dieses können Kreise, Rechtecke, Pfeile etc. sein. Des Weiteren wird unter der Bezeichnung Darstellungsform neben der geometrischen Form jede zusätzliche Anpassung des Symbols subsumiert. Hierunter fallen insbesondere die Erzeugung unscharfer Kanten, die Abrundung von Ecken oder die Verpixelung des Symbols oder Teile hiervon.

Bezüglich der Positionierung werden im Sinne der Erfindung insbesondere dynamische Effekte verstanden, mit denen dem Fahrer die ermittelte Systemunsicherheit visualisiert werden kann. Beispiele hierfür sind das Zittern oder Vibrieren der Symbole.

Für die Ermittlung des Kennwertes, mit dessen Hilfe die Systemunsicherheit der AR-Darstellung beschrieben wird, sieht das erfindungsgemäße Verfahren unterschiedliche Verfahrensschritte vor. Es versteht sich von selbst, dass jede Form der Kennwertermittlung einzeln oder in beliebiger Kombination einer oder mehrerer Verfahrensschritte erfolgen kann.

In einer ersten bevorzugten Ausgestaltung des erfindungsgemäßen Verfahrens wird zur Ermittlung des Kennwertes auf die GPS-Signalgüte zurückgegriffen. Durch eine Auswertung der Anzahl der Satelliten, die an dem aktuellen Ort verfügbar sind, sowie der Stärke der einzelnen GPS-Signale läßt sich eine Maßzahl für die Signalgüte an dem aktuellen Ort ermitteln. Diese läßt sich der Auswahl und Gestaltung der bestmöglichen Darstellung der AR-Inhalte zugrunde legen.

In einer weiteren bevorzugten Ausgestaltung des erfindungsgemäßen Verfahrens wird das für den aktuellen Ort vorhandene Kartenmaterial bewertet und als Basis für die Ermittlung eines Kennwertes zur Beschreibung der Systemunsicherheit herangezogen. Diesem Schritt liegt die Erkenntnis zugrunde, dass das Kartenmaterial ortsabhängig unterschiedlich kartografiert ist. So sind bestimmte Zusatzinformationen (Straßenbreite/-neigung, Höhenprofil etc.) nicht für jede Straße bzw. jeden Ort verfügbar. Die daraus resultierende Systemungenauigkeit bei der Darstellung der AR-Bildinhalte ist jedoch von dem Detailgrad der verfügbaren Zusatzinformationen abhängig.

In einer weiteren bevorzugten Ausgestaltung wird auf die Fahrzeugbewegungen als Maß für die Systemungenauigkeit zurückgegriffen. Diesem Verfahrensschritt liegt die Erkenntnis zugrunde, dass z.B. Nickbewegungen des Fahrzeuges eine wesentliche Einflußgröße für die Darstellungsungenauigkeit der AR-Inhalte sind. Sie ergeben sich einerseits aus der Fahrdynamik (Beschleunigen und Bremsen), andererseits aus Fahrbahnunebenheiten. Da sich das Fahrbahnprofil in der Regel innerhalb weniger Meter nur geringfügig verändert, kann durch die Erfassung der aktuellen Fahrzeugbewegungen mit Hilfe von Beschleunigungs- und Drehratensensoren auf zukünftige Fahrzeugbewegungen geschlossen werden. Die Messung der Fahrzeugaufbaubewegungen kann mittels eines Gyroskops erfolgen. Je höher die Winkeländerung und deren Änderungsgeschwindigkeit sind, desto stärker ist der negative Einfluss auf die Genauigkeit der Anzeige.

In einer weiteren bevorzugten Ausgestaltung des erfindungsgemäßen Verfahrens wird auf die Inhalte des Kamerabildes zurückgegriffen. Üblicherweise sind die heute verfügbaren Kamera- und Auswertesysteme in der Lage, Fahrbahnmarkierungen sowie ausgewählte ortsfeste Bezugspunkte wie Verkehrszeichen etc. zu erkennen und zu identifizieren. Sind in dem Kamerabild keine dieser ortsfesten Bildbestandteile erkennbar, so ist mit einer höheren Ungenauigkeit bei der Darstellung von AR-Inhalten zu rechnen.

In einer bevorzugten Weiterbildung des erfindungsgemäßen Verfahrens wird auf eine zusätzliche Kamera zurückgegriffen. Ordnet man diese Kamera so an, dass das aufgenommene Bild dem Bild entspricht, das der Fahrer auf dem Head-Up-Display sieht, läßt sich aus den resultierenden Verschiebungen zwischen dem realen Bild und den augmentierten Bildinhalten ein Kennwert für die Systemunsicherheit ableiten. Dieser Kennwert läßt sich ― ebenso wie die jeweiligen Kennwerte der zuvor beschriebenen bevorzugten Ausgestaltungen - verwenden, um die augmentierten Bildinhalte so zu verändern, dass der Abbildungsfehler nicht als störend empfunden wird.

Voraussetzung für die beschriebene Weiterbildung des Verfahrens ist, dass die zusätzliche Kamera in der Eyebox des Fahrers, z.B. einem Brillengestell des Fahrers, angebracht ist. Über Bildverarbeitungsalgorithmen läßt sich anschließend berechnen, wie groß die Abweichung zwischen dem Umgebungsbild und den augmentierten Bildinhalten ist.

Unter der Eyebox wird ein quaderförmiger Körper verstanden, in dem sich die Augen des Betrachters befinden müssen. Ausserhalb der Eyebox sind die Inhalte des Head-Up-Display nicht sichtbar, die Projektionsfläche ist für den Beobachter durchsichtig.

Für die Anpassung der augmentierten Bildinhalte in Abhängigkeit von der ermittelten Systemunsicherheit sieht das erfindungsgemäße Verfahren zwei unterschiedliche Weiterbildungen vor. In einer ersten Weiterbildung werden die Symbole, mit denen die augmentierten Bildinhalte dargestellt werden, entsprechend der ermittelten Systemunsicherheit grafisch verändert, das heißt, es wird die Art der Darstellung angepasst. Wird beispielsweise mit Hilfe eines Rechteckes ein Ausschnitt des eingeblendeten realen Bildes zur Hervorhebung maskiert, so läßt sich durch eine Weichzeichnung der Umrisse, eine Veränderung der Helligkeit oder eine Verpixelung der Fläche, d.h. Umwandlung der flächigen Darstellung in eine pixelförmige Darstellung, eine Unschärfe erzeugen, die dem Empfinden des Fahrers nach weniger fehleranfällig ist. Eine weitere Anpassung der augmentierten Bildinhalte kann beispielsweise eine gesteigerte Transparenz des Symbols sein.

In einer anderen Weiterbildung des Verfahrens werden die augmentierten Bildinhalte in eine hochfrequente Eigenbewegung, ein Zittern oder Vibrieren, versetzt. Ein solche Darstellungsform wird von dem Betrachter als weniger fehlerbehaftet eingestuft. Dieses resultiert im Wesentlichen daraus, dass kein direkter Vergleich zwischen den Bildinhalten und der realen Umgebung entlang scharfer Kanten stattfinden kann. Durch die Eigenbewegung verschwimmen optisch die Kanten der augmentierten Bildinhalte. Etwaige Systemungenauigkeiten sind dadurch zwar nicht vermieden, sie werden von dem Betrachter jedoch nicht als fehlerhaft wahrgenommen.

Die erfindungsgemäße Vorrichtung ist dergestalt ausgebildet, dass sie zur Ausführung des zuvor beschriebenen Verfahrens geeignet ist.

Sie besitzt mindestens eine Kamera zur Erfassung eines Bildes der realen Welt. Zur Auswertung dieses Bildes ist eine Steuervorrichtung vorgesehen. In ihr sind die notwendigen Algorithmen hinterlegt, mit denen die AR-Bildinhalte bestimmt werden können.

Die AR-Bildinhalte sowie die sonstigen im Head-Up-Display anzuzeigenden Informationen werden mittels einer Projektionseinrichtung sowie Spiegeln, mit denen ein abgewinkelter Strahlengang erzeugt werden kann, auf die Projektionsfläche übertragen.

Mit Hilfe einer Computervorrichtung ist auf der Basis von Sensordaten ein Kennwert ermittelbar, der die Systemunsicherheit der augmentierten Bildinhalte beschreibt. Um bei dem Bediener den Eindruck eines Anzeigefehlers zu vermeiden, ist eine Steuervorrichtung vorgesehen, mit deren Hilfe die augmentierten Bildinhalte hinsichtlich ihrer grafischen Darstellung und/oder hinsichtlich ihrer Positionierung angepasst werden. Bei der Positionierung sieht die erfindungsgemäße Vorrichtung insbesondere vor, dass die augmentierten Bildinhalte in eine hochfrequente Eigenschwingung, ein Vibrieren bzw. Zittern, versetzbar sind.

Die Erfindung wird nun anhand eines Ausführungsbeispiels mit Bezug zu den Figuren 1 bis 3 näher erläutert. Dabei enthalten:
- Figur 1:: Die in einem Kraftfahrzeug verbaute Vorrichtung zur Ausführung des erfindungsgemäßen Verfahrens,
- Figur 2:: Anzeigebeispiele für AR-Bildinhalte auf einem Head-Up-Display,
- Figur 3.: Das erfindungsgemäße Verfahren zur Darstellung augmentierter Bildinhalte in einem Head-Up-Display.

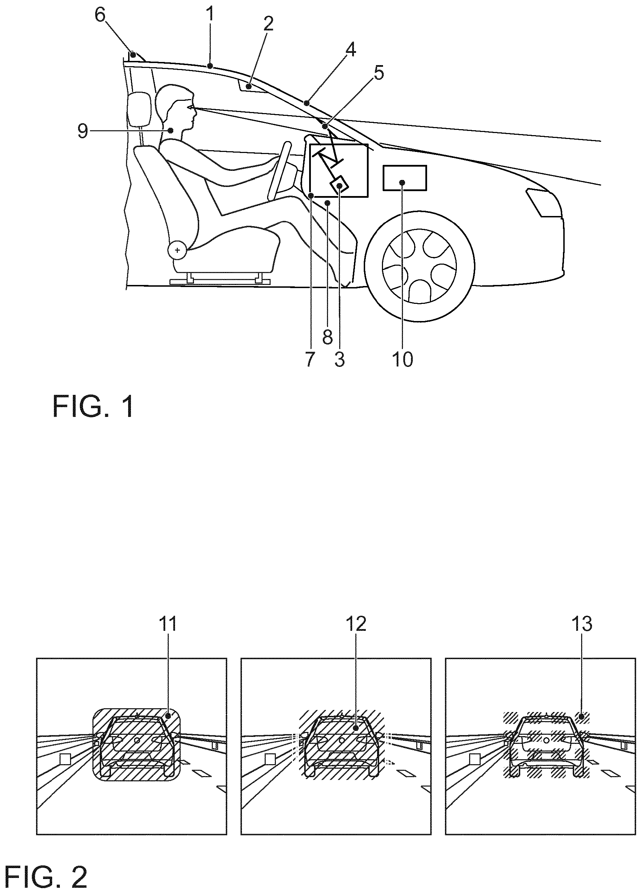

In Figur 1 sind die einzelnen Bestandteile der erfindungsgemäßen Vorrichtung dargestellt. Zu erkennen ist zunächst ein Kraftfahrzeug 1, das mit einem Head-Up-Display 5,7 ausgestattet ist. In dem Ausführungsbeispiel besteht dieses Head-Up-Display 5, 7 aus der bildgebenden Einheit 7, die im Armaturenbrett verbaut ist, sowie der sogenannten Combinerscheibe 5, auf der das eigentliche Bild für den Fahrer sichtbar wird. Die Kombination aus Combinerscheibe 5 und bildgebender Einheit 7 wird nachfolgend als Head-Up-Display 5, 7 bezeichnet, obgleich die eigentliche bildliche Darstellung ausschließlich auf der Combinerscheibe 5 sichtbar wird.

Typischerweise werden mit Head-Up-Displays 5, 7 insbesondere Fahrerinformationen wie die Geschwindigkeit oder Hinweise auf Verkehrszeichen dargestellt. Darüber hinaus können zusätzliche Hinweise an den Fahrer ausgegeben werden, wie z.B. Fahrtrichtungsinformationen oder Gefahrhinweise.

Zur Visualisierung von Gefahrhinweisen 11, 12, 13 werden insbesondere einzelne Bildinhalte hervorgehoben. Hierbei kann es sich um Fahrzeuge, Personen und sonstige Gegenstände handeln, auf die der Fahrer aufmerksam gemacht werden soll.

Zur Positionierung der Gefahrhinweise in dem realen, vom Fahrer wahrgenommenen Bild wird mittels einer Kamera 2, die typischerweise im Bereich des Innenspiegels angebracht ist, ein Bild der Umgebung aufgenommen. Dieses Bild wird einer Steuervorrichtung 10 zur Verfügung gestellt.

In der Steuervorrichtung 10 werden die zusätzlichen, augmentierten Bildinhalte berechnet.

Um den Fahrer auf die beispielhaft erwähnten Lebewesen und Gegenstände hinzuweisen, sieht die in dem Anwendungsbeispiel beschriebene Lösung eine Maskierung der entsprechenden Lebewesen bzw. Gegenstände vor. Hierzu werden von der Steuervorrichtung 10 transparente Bildelemente 11, 12,13 erzeugt, die dergestalt in dem Head-Up-Display 5, 7 positioniert werden, dass sie die entsprechenden Bildinhalte des realen Bildes abdecken. Der Fahrer erkennt damit weiterhin das im Hintergrund liegende reale Bildelement, von dem möglicherweise eine Gefahr ausgeht. Durch die Überlagerung mit einem transparenten, augmentierten Bildelement 11, 12, 13 wird seine Aufmerksamkeit jedoch unmittelbar auf dieses Element gelenkt.

Zusätzlich zu der Aufbereitung und Positionierung der einzelnen augmentierten Bildelemente 11, 12, 13 übernimmt die Steuervorrichtung 10 auch noch die Auswertung von Zusatzinformationen. Hierzu ist sie dergestalt ausgebildet, dass mit ihrer Hilfe auf der Basis hinterlegter Algorithmen einen Kennwert zur Quantifizierung der Systemunsicherheit ableitbar ist.

Dieser Kennwert wird in der Steuervorrichtung 10 weiter verarbeitet. Sie ist dergestalt eingerichtet, dass sie sowohl was die Positionierung als auch die grafische Darstellung angeht, eine Anpassung der AR-Bildinhalte 11, 12, 13 vornehmen kann. Zur Darstellung der dabei berechneten Bildelemente 11, 12, 13 ist die Projektionseinrichtung 3 so eingerichtet, dass über einen abgewinkelten Strahlengang das Bild in dem HUD-Display 5, 7 dargestellt werden kann.

Zur Ermittlung des Kennwertes, mit dem die Systemunsicherheit beschrieben wird, sieht die erfindungsgemäße Vorrichtung in unterschiedlichen Ausgestaltungen unterschiedliche Berechnungsalgorithmen vor. Grundsätzlich sind diese Algorithmen in dem Ausführungsbeispiel in der Steuervorrichtung 10 implementiert. Es versteht sich von selbst, dass sowohl jede einzelne Ausgestaltung als auch eine beliebige Kombination der unterschiedlichen Ausgestaltungen in der Steuervorrichtung 10 hinterlegt sein kann. Folgende Ausgestaltungen der Kennwertermittlung sind in dem Ausführungsbeispiel in dem Algorithmus adressiert:
- Ermittlung des Kennwertes durch eine Auswertung der GPS-Signalgüte;
- Ermittlung des Kennwertes durch eine Auswertung des am aktuellen Ort verfügbaren Kartenmaterials;
- Ermittlung des Kennwertes durch eine Auswertung der Fahrzeugaufbaubewegungen;
- Ermittlung des Kennwertes durch einen Abgleich der im Kartenmaterial hinterlegten ortsbezogenen Informationen mit den Informationen aus dem Kamerabild;
- Ermittlung des Kennwertes durch eine direkte Auswertung des Bildes auf dem HUD-Display 5, 7.

In Figur 2 sind verschiedene Anpassungen eines Bildelementes auf Basis des ermittelten Kennwertes dargestellt. Als Ausgangselement ist die Projektion eines Rechteckes 11 zur Hervorhebung eines vorausfahrenden Kraftfahrzeuges erkennbar. Dieses Rechteck ist transparent ausgeführt, so dass der Fahrer das vorausfahrende Kraftfahrzeug deutlich erkennen kann. In einer ersten vorteilhaften Ausgestaltung werden die Kanten des transparenten Rechtecks 11 unscharf dargestellt. Diese Darstellungsform verdeutlicht dem Fahrer ebenso wie das transparente Rechteck 12 die im System vorhandene, durch den ermittelten Kennwert beschriebene Systemunsicherheit.

In einer weiteren bevorzugten Ausgestaltung wird das transparente Rechteck durch ein Punktraster 13 ersetzt. Ein solches Bildelement läßt einen vorhandenen Positionierungsfehler weniger ausgeprägt erscheinen.

In einer weiteren vorteilhaften Ausgestaltung der erfindungsgemäßen Vorrichtung wird das augmentierte Bildelement 11, 12, 13 zur Hervorhebung des Gefahrenobjektes in eine hochfrequente Eigenbewegung, d.h. ein Zittern bzw. Vibrieren, versetzt. Es ist naheliegend, dass diese Anpassung sowohl für die beschriebenen vollflächigen Bildelemente 11, 12 als auch das gerasterte Bildelement 13 erfolgen kann.

Grundsätzlich wird durch die Anpassung der AR-Bildelemente 11, 12, 13 der technische Effekt erzielt, eine Darstellung zu ermöglichen, die dem Beobachter, im Falle eines Kraftfahrzeuges dem Fahrer 9, als weniger fehlerbehaftet erscheint. Welche Anpassung 11, 12, 13 dabei gewählt wird, kann sowohl durch die Vorrichtung selber als auch durch eine manuelle Vorgabe seitens des Fahrers 9 erfolgen. Hierzu wäre ein entsprechendes Konfigurationsmenü zu hinterlegen, mit dessen Hilfe der Fahrer die Art der Anpassung 11, 12, 13 manuell vorgeben kann.

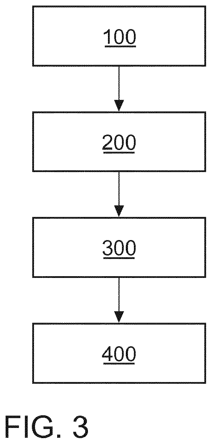

In Figur 3 sind die einzelnen Schritte des erfindungsgemäßen Verfahrens in einer beispielhaften Ausgestaltung in einem Kraftfahrzeug 1 dargestellt.

In einem ersten Schritt 100 wird das eigentliche HUD-Bild erzeugt und auf die Projektionsfläche 5 des HUD-Displays 5, 7 projeziert. Das Bild setzt sich aus mehreren Bildelementen zusammen. Dabei handelt es sich um die Zusatzinformationen für den Fahrer 9, z.B. die Fahrzeuggeschwindigkeit, sowie die augmentierten Bildinhalte 11, 12, 13, die von der Steuervorrichtung 10 auf Basis des Kamerabildes, das von der Kamera 2 erfasst wurde, erzeugt wurden.

In einem Schritt 200 wird der Kennwert zur Beschreibung der Systemunsicherheit ermittelt. Dieser Schritt wird mit entsprechenden Algorithmen in der Steuervorrichtung 10 ausgeführt. Dabei werden in dem Ausführungsbeispiel verschiedene Auswertungen vorgenommen und zu einem beschreibenden Kennwert verdichtet. Folgende Auswertungen sind in dem Ausführungsbeispiel vorgesehen:
- eine Bestimmung der GPS-Signalgüte,
- eine Bestimmung der Genauigkeit des an dem momentanen Ort verfügbaren Kartenmaterials,
- eine Bestimmung der momentanen Fahrzeugaufbaubewegungen,
- ein Abgleich der im Kartenmaterial hinterlegten ortsbezogenen Informationen mit den Informationen aus dem Kamerabild,

Die einzelnen Auswertungen werden zu einem Gesamt-Kennwert zusammengefasst, der die Systemunsicherheit beschreibt.

Abhängig von dem Kennwert wird im Schritt 300 die Darstellung der augmentierten Bildinhalte 11, 12, 13 angepasst. In dem Ausführungsbeispiel wird das AR-Bildelement 11, 12, 13 zur Hervorhebung des vorausfahrenden Fahrzeuges in eine hochfrequente Eigenschwingung versetzt. Der Beobachter nimmt das AR-Bildelement 11, 12, 13 damit als weniger fehlerbehaftet wahr, obwohl die Konturen des Bildelementes und die Umrisse des vorausfahrenden Fahrzeuges aufgrund der unvermeidbaren Darstellungsungenauigkeit leicht voneinander abweichen.

Im Schritt 400 werden die augmentierten Bildinhalte auf der Combinerscheibe 5 des Head-Up-Displays 5, 7 ausgegeben.

### Bezugszeichenliste

- 1: Kraftfahrzeug
- 2: Kamera
- 3: Projektionseinheit
- 4: Windschutzscheibe (Projektionsfläche)
- 5: Combinerscheibe (Projektionsfläche)
- 6: GPS-Antenne
- 7: Bilderzeugungseinheit
- 8: Armaturenbrett
- 9: Fahrer
- 10: Steuervorrichtung
- 11: Augmented Reality Bildelement (Gefahrenhinweis)
- 12: Augmented Reality Bildelement (Gefahrenhinweis)
- 13: Augmented Reality Bildelement (Gefahrenhinweis)

- 100: Projektion der Bildelemente auf die Projektionsfläche
- 200: Kennwertermittlung
- 300: Anpassung der AR-Bildinhalte
- 400: Projektion der angepassten AR-Bildinhalte

## Patentansprüche

1. Verfahren zur Erkennung und Visualisierung von Systemunsicherheit bei der Darstellung augmentierter Bildinhalte (11, 12, 13) in einem Head-Up-Display (5, 7) in einem Fortbewegungsmittel, bei dem
- mit Hilfe einer Kamera (2) ein Bild der realen Welt erfasst und an eine Steuervorrichtung (10) übertragen wird,
- augmentierte Bildinhalte (11, 12, 13) ermittelt werden, die in dem Head-Up-Display (5, 7) dergestalt darstellbar sind, dass sie aus der Sicht des Betrachters in das Bild der realen Welt integriert sind, **dadurch gekennzeichnet, dass**
- ein Kennwert ermittelt wird, der geeignet ist, die Systemunsicherheit bei der Darstellung der augmentierten Bildinhalte (11, 12, 13) zu bewerten, wobei zur Ermittlung des Kennwertes eine oder mehrere der folgenden Maßnahmen durchgeführt werden: eine Auswertung der GPS-Signalgüte, eine Auswertung der Genauigkeit des am aktuellen Ort verfügbaren Kartenmaterials, eine Auswertung der momentanen Fahrzeugaufbaubewegungen, ein Abgleich der im Kartenmaterial hinterlegten ortsbezogenen Informationen mit den Informationen aus dem Kamerabild, oder eine direkte Auswertung des Bildes auf dem HUD-Display;
- und
- die augmentierten Bildinhalte (11, 12, 13) in Abhängigkeit von dem ermittelten Kennwert angepasst werden, um die Wahrnehmbarkeit der Darstellungsungenauigkeit zu verringern, wobei die augmentierten Bildinhalte (11, 12, 13) in eine die Systemunsicherheit beschreibende Eigenbewegung relativ zu dem realen Bild versetzt werden.

2. Verfahren nach Anspruch 1, **dadurch gekennzeichnet, dass** eine GPS-Signalgüte erfasst und in die Bewertung der Systemunsicherheit einbezogen wird.

3. Verfahren nach einem der vorherigen Ansprüche, **dadurch gekennzeichnet, dass** ein an dem aktuellen Ort des Fortbewegungsmittels verfügbares Kartenmaterial bewertet und in die Bewertung der Systemunsicherheit einbezogen wird.

4. Verfahren nach einem der vorherigen Ansprüche, **dadurch gekennzeichnet, dass** Bewegungen eines Fahrzeugaufbaus des Fortbewegungsmittels, in dem das Head-Up-Display verbaut ist, erfasst und in die Bewertung der Systemunsicherheit einbezogen werden.

5. Verfahren nach einem der vorherigen Ansprüche, **dadurch gekennzeichnet, dass** das erfasste Kamerabild mit in dem Kartenmaterial hinterlegten, ortsfesten Informationen verglichen wird und in die Bewertung der Systemunsicherheit einbezogen wird.

6. Verfahren nach einem der vorherigen Ansprüche, **dadurch gekennzeichnet, dass** mittels einer weiteren Kamera, die in einer Eyebox des Führers des Fortbewegungsmittels angeordnet ist, ein Bild der Darstellung auf dem Head-Up-Display (5, 7) erfasst wird und aus einem Vergleich der dabei erfassten augmentierten Bildinhalte (11, 12,13) mit dem Bild der realen Welt ein die Systemunsicherheit beschreibender Kennwert ermittelt wird.

7. Verfahren nach einem der vorherigen Ansprüche, **dadurch gekennzeichnet, dass** die Art der Darstellung der augmentierten Bildinhalte (11, 12, 13) in Abhängigkeit von dem die Systemunsicherheit beschreibenden Kennwert verändert wird.

8. Vorrichtung zur Erkennung und Visualisierung von Systemunsicherheit bei der Darstellung augmentierter Bildinhalte in einem Head-Up-Display (5, 7), umfassend
- mindestens eine Kamera (2) zur Erfassung eines Bildes der realen Welt,
- eine Steuervorrichtung (10), mit deren Hilfe augmentierte Bildinhalte (11, 12, 13) ermittelt werden, die in dem Head-Up-Display (5, 7) kontaktanalog darstellbar sind,
- ein Head-Up-Display (5, 7), auf dem die ermittelten augmentierten Bildinhalte (11, 12, 13) darstellbar sind, wobei aus Sicht des Betrachters die Bildinhalte (11, 12, 13) in das reale Bild integriert erscheinen, **dadurch gekennzeichnet, dass**
- die Steuervorrichtung (10) zur Ermittlung eines Kennwertes, der die Systemunsicherheit bei der Ermittlung der augmentierten Bildinhalte (11, 12, 13) in Bezug auf das Bild der realen Welt beschreibt, eingerichtet ist, indem zur Ermittlung des Kennwertes eine oder mehrere der folgenden Maßnahmen erfolgt: eine Auswertung der GPS-Signalgüte, eine Auswertung der Genauigkeit des am aktuellen Ort verfügbaren Kartenmaterials, eine Auswertung der momentanen Fahrzeugaufbaubewegungen, ein Abgleich der im Kartenmaterial hinterlegten ortsbezogenen Informationen mit den Informationen aus dem Kamerabild, oder eine direkte Auswertung des Bildes auf dem HUD-Display; und
- wobei die Steuervorrichtung (10) eingerichtet ist, die augmentierten Bildinhalte (11, 12, 13) in Abhängigkeit des ermittelten Kennwertes in eine die Systemunsicherheit beschreibende Eigenbewegung relativ zu dem realen Bild zu versetzen.

## Claims

1. Method for recognizing and visualizing system uncertainty in the representation of augmented image contents (11, 12, 13) in a head-up display (5, 7) in a means of locomotion, in which
- an image of the real world is captured with the aid of a camera (2) and transferred to a control apparatus (10) ,
- augmented image contents (11, 12, 13), which can be represented in the head-up display (5, 7) in such a way that from the point of view of the observer they are integrated into the image of the real world, are ascertained, **characterized in that**
- a characteristic value, which is suitable for assessing the system uncertainty in the representation of the augmented image contents (11, 12, 13), is ascertained, wherein one or more of the following measures are taken for ascertaining the characteristic value: an evaluation of the GPS signal quality, an evaluation of the accuracy of the map material available at the current location, an evaluation of the instantaneous vehicle body movements, a comparison of the location-related information stored in the map material with the information from the camera image, or a direct evaluation of the image on the HUD display;
- and
- the augmented image contents (11, 12, 13) are adapted depending on the ascertained characteristic value in order to reduce the perceptibility of the representation inaccuracy, wherein the augmented image contents (11, 12, 13) are set into a motion of their own relative to the real image describing the system uncertainty.

2. Method according to Claim 1, **characterized in that** a GPS signal quality is captured and incorporated in the assessment of the system uncertainty.

3. Method according to either of the preceding claims, **characterized in that** a map material available at the current location of the means of locomotion is assessed and incorporated into the assessment of the system uncertainty.

4. Method according to one of the preceding claims, **characterized in that** movements of a vehicle body of the means of locomotion, in which the head-up display is installed, are captured and incorporated into the assessment of the system uncertainty.

5. Method according to one of the preceding claims, **characterized in that** the captured camera image is compared with fixed-location information stored in the map material, and incorporated into the assessment of the system uncertainty.

6. Method according to one of the preceding claims, **characterized in that** an image of the representation on the head-up display (5, 7) is captured by means of a further camera, which is arranged in an eyebox of the driver of the means of locomotion, and a characteristic value describing the system uncertainty is ascertained from a comparison of the augmented image contents (11, 12, 13) that are captured in the process with the image of the real world.

7. Method according to one of the preceding claims, **characterized in that** the type of representation of the augmented image contents (11, 12, 13) is modified depending on the characteristic value describing the system uncertainty.

8. Apparatus for recognizing and visualizing system uncertainty in the representation of augmented image contents in a head-up display (5, 7), comprising
- at least one camera (2) for capturing an image of the real world,
- a control apparatus (10) with the aid of which augmented image contents (11, 12, 13), which can be represented in a contact-analogue manner in the head-up display (5, 7), are ascertained,
- a head-up display (5, 7), on which the ascertained augmented image contents (11, 12, 13) can be represented, wherein the image contents (11, 12, 13) appear from the point of view of the observer to be integrated into the real image, **characterized in that**
- the control apparatus (10) is configured for ascertaining a characteristic value that describes the system uncertainty in the ascertainment of the augmented image contents (11, 12, 13) in relation to the image of the real world, by way of one or more of the following measures being taken for ascertaining the characteristic value: an evaluation of the GPS signal quality, an evaluation of the accuracy of the map material available at the current location, an evaluation of the instantaneous vehicle body movements, a comparison of the location-related information stored in the map material with the information from the camera image, or a direct evaluation of the image on the HUD display; and
- wherein the control apparatus (10) is configured to set the augmented image contents (11, 12, 13) into a motion of their own relative to the real image describing the system uncertainty depending on the ascertained characteristic value.

## Revendications

1. Procédé de reconnaissance et de visualisation d'une incertitude systématique lors de la représentation d'un contenu visuel augmenté (11, 12, 13) sur un affichage tête haute (5, 7) dans un moyen de locomotion, dans lequel
- à l'aide d'une caméra (2), une image du monde réel est détectée et transmise à un dispositif de commande (10),
- un contenu visuel augmenté (11, 12, 13) est déterminé qui peut être représenté sur l'affichage tête haute (5, 7) de telle sorte que du point de vue de l'observateur, il est intégré dans l'image du monde réel,
**caractérisé en ce que**
- une valeur caractéristique est déterminée qui est adaptée pour évaluer l'incertitude systématique lors de la représentation du contenu visuel augmenté (11, 12, 13), dans lequel, pour la détermination de la valeur caractéristique, une ou plusieurs des mesures suivantes sont effectuées : une évaluation de la qualité de signal de GPS, une évaluation de l'exactitude des données cartographiques disponibles à l'emplacement actuel, une évaluation des mouvements de carrosserie de véhicule instantanés, un rapprochement des informations relatives à l'emplacement, enregistrées dans les données cartographiques, avec les informations issues de l'image de caméra, ou une évaluation directe de l'image sur l'affichage tête haute ;
- et
- le contenu visuel augmenté (11, 12, 13) est adapté en fonction de la valeur caractéristique déterminée afin de diminuer la perception de l'inexactitude de représentation, le contenu visuel augmenté (11, 12, 13) étant placé dans un mouvement propre par rapport à l'image réelle, décrivant l'incertitude systématique.

2. Procédé selon la revendication 1, **caractérisé en ce qu'**une qualité de signal de GPS est détectée et prise en compte dans l'évaluation de l'incertitude systématique.

3. Procédé selon l'une quelconque des revendications précédentes, **caractérisé en ce que** des données cartographiques disponibles à l'emplacement actuel du moyen de locomotion sont évaluées et prises en compte dans l'évaluation de l'incertitude systématique.

4. Procédé selon l'une quelconque des revendications précédentes, **caractérisé en ce que** des mouvements d'une carrosserie de véhicule du moyen de locomotion dans lequel l'affichage tête haute est installé sont détectés et pris en compte dans l'évaluation de l'incertitude systématique.

5. Procédé selon l'une quelconque des revendications précédentes, **caractérisé en ce que** l'image de caméra détectée est comparée à des informations stationnaires, enregistrées dans les données cartographiques, et prises en compte dans l'évaluation de l'incertitude systématique.

6. Procédé selon l'une quelconque des revendications précédentes, **caractérisé en ce qu'**au moyen d'une autre caméra qui est disposée dans un boîtier oculaire du conducteur du moyen de locomotion, une image de la représentation sur l'affichage tête haute (5, 7) est détectée, et d'après une comparaison du contenu visuel augmenté (11, 12, 13) détecté à cette occasion avec l'image du monde réel, une valeur caractéristique décrivant l'incertitude systématique est déterminée.

7. Procédé selon l'une quelconque des revendications précédentes, **caractérisé en ce que** le type de la représentation du contenu visuel augmenté (11, 12, 13) est modifié en fonction de la valeur caractéristique décrivant l'incertitude systématique.

8. Dispositif de reconnaissance et de visualisation d'une incertitude systématique lors de la représentation d'un contenu visuel augmenté sur un affichage tête haute (5, 7), comprenant
- au moins une caméra (2) pour détecter une image du monde réel,
- un dispositif de commande (10) à l'aide duquel un contenu visuel augmenté (11, 12, 13) est déterminé qui peut être représenté de manière analogue au contact sur l'affichage tête haute (5, 7),
- un affichage tête haute (5, 7) sur lequel le contenu visuel augmenté (11, 12, 13) déterminé peut être représenté, dans lequel, du point de vue de l'observateur, le contenu visuel (11, 12, 13) apparaît comme étant intégré dans l'image réelle,
**caractérisé en ce que**
- le dispositif de commande (10) est aménagé pour déterminer une valeur caractéristique qui décrit l'incertitude systématique lors de la représentation du contenu visuel augmenté (11, 12, 13) par rapport à l'image du monde réel **en ce que** pour la détermination de la valeur caractéristique, une ou plusieurs des mesures suivantes est/sont effectuée(s) : une évaluation de la qualité de signal de GPS, une évaluation de l'exactitude des données cartographiques disponibles à l'emplacement actuel, une évaluation des mouvements de carrosserie de véhicule instantanés, un rapprochement des informations relatives à l'emplacement, enregistrées dans les données cartographiques, avec les informations issues de l'image de caméra, ou une évaluation directe de l'image sur l'affichage tête haute ; et
- le dispositif de commande (10) étant aménagé pour mettre le contenu visuel augmenté (11, 12, 13) en un mouvement propre par rapport à l'image réelle, décrivant l'incertitude systématique, en fonction de la valeur caractéristique déterminée.
